**Europäisches Patentamt**

**European Patent Office**

**Office européen des brevets**

(19)

(11) **EP 0 831 632 A2**

(12) **EUROPÄISCHE PATENTANMELDUNG**

(43) Veröffentlichungstag:
25.03.1998 Patentblatt 1998/13

(51) Int. Cl.⁶: **H04M 3/22**, H04M 3/08,
H04M 3/30, H04M 11/04

(21) Anmeldenummer: 97115755.7

(22) Anmeldetag: 10.09.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 24.09.1996 DE 19639180

(71) Anmelder:
SIEMENS AKTIENGESELLSCHAFT
80333 München (DE)

(72) Erfinder:
• Neuhäusler, Chlodwig, Dipl.-Ing., (FH)
81545 München (DE)
• Bronold, Josef, Dipl.-Ing., (FH)
82110 Germering (DE)

(54) **Schaltungsanordnung zur Fehlerindikation bei analogen Teilnehmerleitungen von Notruftelefonen digitaler Zeitmultiplex-Fernsprechvermittlungsanlagen**

(57)     Die Schaltungsanordnung weist zwei zu einer vorhandenen Indikationsschaltung für die Teilnehmerschleifenindikation zusätzliche Indikatoren (I1, I2) auf. Der eine (I2) summiert die explizit vorhandenen Längsstrom- ($I_L$) und Querstrominformationen ($I_T$) zum Zwecke der Erdschlußerkennung, der andere (I1) wertet die Querstrominformation zur Erkennung von Leitungsunterbrechungen aus.

**FIG 2**

EP 0 831 632 A2

**Beschreibung**

Die Erfindung betrifft eine Schaltungsanordnung zur Fehlerindikation bei analogen Teilnehmerleitungen von Notruftelefonen digitaler Zeitmultiplex-Fernsprechvermittlungsanlagen gemäß dem Oberbegriff des Patentanspruches 1.

Die auf das Auftreten von Fehlern zu überwachenden Teilnehmerleitungen sind demnach über Teilnehmeranschlußschaltungen an eine Fernsprechvermittlungsstelle angeschlossen, die explizit jeweils eine im Niedervoltbereich liegende Information über den Schleifenstrom und über den Erdstrom der Teilnehmerleitung in Form einer Querstrominformation bzw. einer Längsstrominformation liefern, die zur Weiterverarbeitung in Digitalsignale, der Vermittlungsstelle zugeführt werden und für die Teilnehmerschleifenindikation bestimmt sind.

Die Überwachung von analogen Teilnehmerleitungen im Ruhezustand auf Erdschluß der a-Ader und/oder der b-Ader sowie auf Unterbrechung der Teilnehmerschleife ist bei Notruftelefonen von besonderer Wichtigkeit, da deren Funktionsfähigkeit jederzeit gewährleistet sein muß.

Die Teilnehmeranschlußschaltungen für solche Notruftelefone sind in einen Hochvoltteil, an den die Teilnehmerleitung angeschlossen ist, und in einen Niedervolt/Signalprozessorteil gegliedert. Wesentliche Aufgabe des Hochvoltteils sind die Speisung der Teilnehmerleitung, die Überwachung des Adernstroms und die Bildung der erwähnten expliziten, im Niedervoltbereich liegenden Querstrom- und Längsstrominformation.

Wesentliche Aufgaben des Niedervolt/Signalprozessorbausteins sind die Teilnehmerschleifenindikation und die Realisierung der Sprachsignalübertragung, d. h. die 2/4-Drahtumsetzung, die Codierung und Decodierung der Sprachsignale und die Realisierung der Schnittstellenfunktion zur Vermittlungsstelle hin. Im Ruhezustand des Notruftelefons arbeitet die Teilnehmeranschlußschaltung im sogenannten Power-Down-Zustand, in dem zur Stromersparnis ein verringerter Speisestrom geliefert wird und dementsprechend bei der Indikationsschaltung zur Teilnehmerschleifenindikation eine entsprechend niedrige Ansprechschwelle wirksam geschaltet ist.

Die Verwendung des vorhandenen Erdschlußindikators, der nur in außerhalb des Betriebszustandes „Ruhe" liegenden Betriebszuständen eine Rolle spielt, ist wegen des hohen Schleifenwiderstandes im Power-Down-Zustandes für eine Fehlerindikation nicht ausreichend sicher.

Eine Besonderheit von Notrufanlagen ist die Möglichkeit über ein Partyline-Interface eine Mehrzahl von Notruftelefonen an eine Teilnehmerleitung anzuschließen und in diesem Zusammenhang Fehler auf der die Notruftelefone verbindenden Partyline durch gezielte Teilnehmerschleifenunterbrechung für eine festgelegte Zeitspanne zu signalisieren. Eine Indikationsschaltung zur Detektion von Schleifenunterbrechungen jeglicher Art und damit auch für die Partylinefehlermeldung ist in der Teilnehmerschaltung nicht integriert.

Die Aufgabe der Erfindung besteht daher darin, eine Schaltungsanordnung zur Fehlerindikation auf analogen Teilnehmeranschlußleitungen für Notruftelefone anzugeben, durch die die erforderliche Auswertesicherheit gewährleistet ist und zwar auch im Hinblick auf die Problematik der bei Notrufsystemen vorkommenden Partyline-Fehlersignalisierung.

Diese Aufgabe wird mittels der im Kennzeichen des Patentanspruches 1 angegebenen Merkmale gelöst.

Es sind demnach zusätzlich zu den der Teilnehmerschleifenindikation dienenden Indikationsschaltungen der Teilnehmeranschlußschaltung zwei Indikatoren vorhanden, von denen der eine die im Niedervoltbereich liegende von der Teilnehmeranschlußschaltung explizit zur Verfügung gestellte Querstrominformation zur Erkennung von störungsbedingten Teilnehmerschleifenunterbrechungen auswertet und der andere diese Querstrominformation und die im Niedervoltbereich liegende explizit zur Verfügung gestellte Längsstrominformation zum Zwecke der Erdschlußerkennung summiert.

Dadurch, daß mit den im Niedervoltbereich liegenden Längsstrom- bzw. Querstrominformationen bezüglich der Teilnehmerleitung gearbeitet wird, also Information, die durch den Hochvoltteil der Teilnehmeranschlußschaltung schon vorverarbeitet sind, ergibt sich gegenüber der ebenfalls vorhandenen Möglichkeit, direkt an den Leitungsadern Detektionsgrößen abzugreifen der Vorteil, daß keine gesonderten Maßnahmen für einen Überspannungsschutz der Indikatoren getroffen werden müssen. Es ist ferner möglich, die Ansprechschwellen der Indikatoren exakt den Bedürfnissen der Fehlererkennung im Ruhezustand anzupassen. Ein weiterer Vorteil des erfindungsgemäßen Konzepts besteht darin, daß im Zusammenhang mit der Erdschlußindikation aufgrund der Summenbildung aus Querstrom und Längsstrom ein Offset-Fehler, der durch den Betrieb des Hochvoltbausteins bedingt sein kann, eliminiert wird.

Weitere Ausgestaltungen der Erfindung betreffen zweckmäßige konkrete Realisierungen des erfindungsgemäßen Schaltungskonzepts.

Nachstehend wird die Erfindung anhand von Ausführungsbeispielen unter Bezugnahme auf eine Zeichnung näher erläutert.

In der Zeichnung zeigen:

Figur 1 das Blockschaltbild einer Fernsprechvermittlungsanlage, deren Bestandteil die erfindungsgemäße Schaltungsanordnung sein kann.

Figur 2 einen Teil einer Teilnehmeranschlußschaltung eines Notruftelefons zusammen mit der erfindungsgemäßen Schaltungsanordnung in Blockschaltbildform,

Figur 3 ein mehr ins einzelne gehendes Schaltbild eines Ausführungsbeispiel der erfindungsgemäßen Schaltungsanordnung.

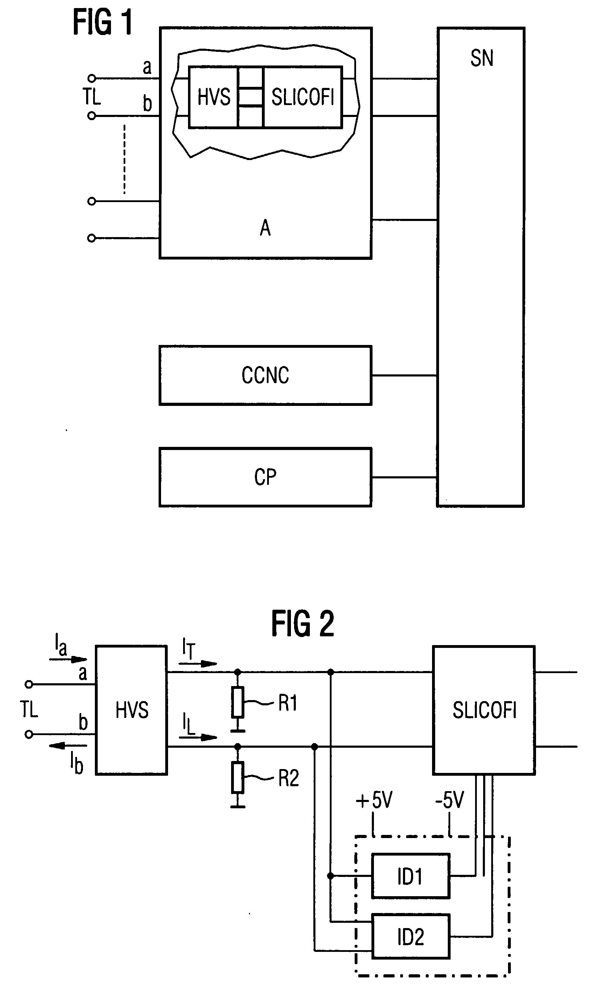

In der Figur 1 sind von einer digitalen Zeitmultiplex-Fernsprechvermittlungsanlage als zentrale Teile ein Koppelnetz SN, ein Koordinationsprozessor CP sowie eine Zeichengabesteuerung CCNC dargestellt.

Die dezentralen Teile dieser Fernsprechvermittlungsanlage sind Bestandteil des Anschlußbereichs A, an den mit anderen Vermittlungsstellen verbindende Anschlußleitungen sowie mit Nebenstellen oder einzelnen Teilnehmerendgeräten verbindende Teilnehmerleitungen angeschlossen sind. Dieser Anschlußbereich enthält unter anderem Teilnehmeranschlußschaltungen, die die Schnittstelle zwischen den analogen Leitungen und der digitalen Umgebung des Vermittlungssystems darstellen.

In der Figur 1 ist eine Teilnehmerleitung TL mit ihrer zugehörigen Teilnehmeranschlußschaltung SLIC (Subscriber Line Interface Circuit) hervorgehoben, die dem Anschluß eines Notruftelefons dient. Die Teilnehmeranschlußschaltung SLIC weist, wie in der Figur angedeutet, einen teilnehmerseitigen Hochvoltteil HVS (Hochvolt SLIC) sowie einen diesem nachgeschalteten Niedervolt/Signalprozessorbaustein SLICOFI (Signal Processing Subscriber Line Interface Circuit Codec Filter) auf.

Die Überwachung der mit dem Notruftelefon verbindenden Teilnehmerleitung TL auf das Auftreten von Erdschlüssen deren a- und/oder b-Ader sowie auf Leitungsunterbrechung, jeweils im Ruhezustand, ist Aufgabe der nachstehend näher erläuterten erfindungsgemäßen Schaltungsanordnung.

In der Figur 2 sind nochmals der Hochvoltteil HVS und der Niedervolt/Signalprozessorteil SLICOFI der Teilnehmeranschlußschaltung der auf Fehler zu überwachenden Teilnehmerleitung TL angedeutet. Er liefert unter anderem die im vorliegenden Zusammenhang interessierenden Signale $I_T$ und $I_L$. Das Signal $I_T$ ist ein Querstromsignal, das von den Strömen auf den Adern a und b entsprechend dem Zusammenhang

$$I_T = -\frac{Ia+Ib}{100}$$

abgeleitet wird. Das Signal $I_L$ ist ein Längsstromsignal, das gemäß dem Zusammenhang

$$I_L = \frac{Ia-Ib}{100}$$

abgeleitet ist.

Die Signale $I_L$ und $I_T$ werden dem Niedervolt/Signalprozessorbaustein SLICOFI zugeführt.

Sie werden ferner der durch eine gestrichelte Umrahmung gekennzeichneten erfindungsgemäßen Schaltungsanordnung zugeführt, die im wesentlichen aus einem Indikator ID1, an dessen Eingang das Signal $I_T$ gelangt und aus dem Indikator ID2 besteht, an dessen beide Eingänge sowohl das Signal $I_L$ als auch das Signal $I_T$ gelangen.

Der Indikator ID1 ist so augebildet, daß er ein Ausgangssignal abgibt, wenn das Stromsignal $I_T$ und damit der Teilnehmerleitungsschleifenstrom

$$I_s = \frac{Ia+Ib}{2}$$

einen bestimmten Minimalwert, der als Vorliegen einer Unterbrechung der Leitungsschleife gewertet werden kann, unterschreitet hat. Im Fall einer praktischen Ausführung wird dies beim Unterschreiten eines Schleifenstromwertes von 2,6 mA angenommen.

Der zweite Indikator ID2 gibt ein Ausgangssignal ab, wenn der der Summenwert der zugeführten Signale und damit der Strom auf der b-Ader der Teilnehmeranschlußleitung einen bestimmten Minimalwert unterschritten hat gemäß dem Zusammenhang

$$I_b = \frac{UT+UL}{-30\Omega}\ .$$

Dabei sind $U_T$ und $U_L$ der Spannungsabfall aufgrund der Ströme $I_T$ und $I_L$ an den die Eingänge des Indikators ID2 mit einem Erdpotential führenden Schaltungspunkt verbindenden Widerstände R1 bzw R2. Das Unterschreiten kann als Indiz des Vorliegens eines Erdschlusses entweder der a-Ader oder der b-Ader gewertet werden. Bei dem erwähnten Ausführungsbeispiel liegt die Schwelle des Stroms auf der b-Ader bei 2,9 mA.

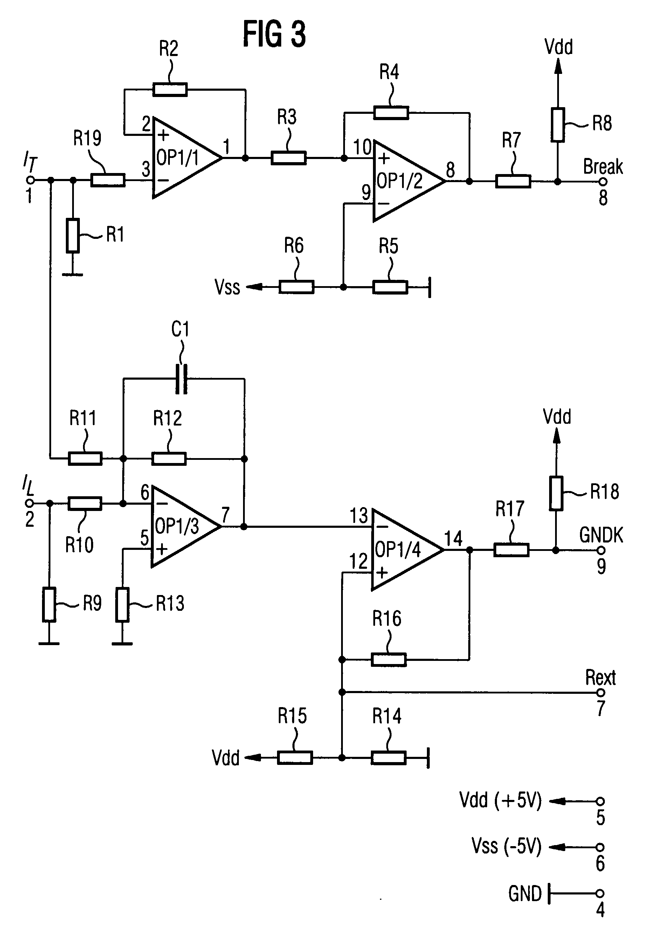

Wie die Figur 3 zeigt, dient der Auswertung der Querstrominformation $I_T$ bzw. der entsprechenden am Widerstand R1 abfallenden Spannung $U_T$ dient ein nichtinvertierender Schmitt-Trigger, der in Form eines Operationsverstärkers OP1/2 realisiert ist. Er ist durch einen invertiernden Trennverstärker in Form des Operationsverstärkers OP1/1 von der den Strom $I_T$ führenden Leitung entkoppelt

Bei einem konkret realisierten Ausführungsbeispiel ist der Schmitt-Trigger so ausgelegt, daß er dann, wenn die Spannung $U_T$ einen Wert von - 78 mV unterschreitet, was einem Schleifenstrom von 2,6 mA entspricht und als Schleifenunterbrechung gewertet wird, seinen Leitfähigkeitszustand wechselt. Sobald die Spannung $U_T$ die Schwelle von - 84 mV überschritten hat, erfolgt eine Rückschaltung in den ursprünglichen Leitfähigkeitszustand.

Der Indikator I2 besteht gemäß Figur 3 aus einem invertierenden Summationsverstärker, dem die aufgrund der Querstrominformation $I_T$ am Widerstand R1 abfallende Spannung $U_T$ und die aufgrund der Längsstrominformation $I_L$ am Widerstand R9 abfallende Spannung $U_L$ als Summensignal zugeführt werden. Es gilt dabei $U_{sum} = -(U_T + U_L) = I_b \, 30 \, \Omega$. Der Summierverstärker ist in Form eines Operationsverstärkers OP1/3 realisiert. Weiterer Bestandteil des Indikators I2 ist ein invertierender Schmitt-Trigger in Form eines Operationsverstärkers OP1/4, der das Ausgangssignal des Summierverstärkers bewertet.

Die Ausgangssignale der Schmitt-Trigger OP1/2 und OP1/4 werden nach einer Pegelanpassung über den Ausgang 9 dem Baustein SLICOFI zugeführt.

**Patentansprüche**

1. Schaltungsanordnung zur Fehlerindikation bei analogen Teilnehmerleitungen von Notruftelefonen digitaler Zeitmultiplex-Fernsprechvermittlungsanlagen, wobei der Anschluß der Teilnehmerleitungen über Teilnehmeranschlußschaltungen erfolgt, die explizit jeweils eine im Niedervoltbereich liegende Information über den Schleifenstrom in Form einer Querstrominformation der Teilnehmerleitung und über den Erdstrom in Form einer Längsstrominformation der Teilnehmerleitung liefern, die zur Weiterverarbeitung in Digitalsignale und zur Teilnehmerleitungsschleifenindikation bestimmt sind, **dadurch gekennzeichnet,** daß sie zwei zu einer Indikationsschaltung für die Teilnehmerschleifenindikation zusätzliche Indikatoren (I1, I2) aufweist, von denen der eine (I1) die Querstrominformation ($I_T$) zur Erkennung von störungsbedingten Teilnehmerschleifenunterbrechungen auswertet und der andere (I2) die Querstrominformation ($I_T$) und die Längsstrominformation ($I_L$) zur Erdschlußerkennung summiert.

2. Schaltungsanordnung nach Anspruch 1, **dadurch gekennzeichnet,** daß die Indikationsschaltung zur Erkennung der störungsbedingten Schleifenstromunterbrechungen aus einem nicht invertierenden Trennverstärker (OP1/1) und einem diesem nachgeschalteten als Auswerteschaltung dienenden Schmitt-Trigger (OP1/2) und die Indikationsschaltung (I2) zur Erdschlußerkennung aus einem invertierenden Swmmationsverstärker (OP1/3) und einem diesem nachgeschalteten als Auswerteschaltung dienenden invertierenden Schmitt-Trigger (OP1/4) bestehen.

3. Schaltungsanordnung nach Anspruch 2, **dadurch gekennzeichnet,** daß die Verstärker und die SchmittTrigger durch entsprechende Operationsverstärker realisiert sind.

**FIG 1**

**FIG 2**

# FIG 3